# EUROPEAN PATENT APPLICATION

(11) **EP 1 808 806 A1**
(43) Date of publication of application: **18.07.2007**
(21) Application number: 05292790.2
(22) Date of filing: 23.12.2005
(51) Int. Cl.: G06Q 20/00

(54) **Virtual fiscal printer**

(71) Applicant: Axalto SA, 92120 Montrouge (FR)
(72) Inventor: Mengus, Jean-Paul c/o AXALTO SA, I.P.D., 92120 Montrouge (FR)
(74) Representative: Cour, Pierre

(57) **Abstract**

The invention relates to a mobile phone (100) comprising a user interface and communication means (150, 160), the mobile phone further comprising a bill inputting module (180), a bill archiving module (181), and a bill printing module (182).

## Description

The invention relates to a virtual fiscal printer consisting of a mobile phone, to a system comprising a virtual fiscal printer, a printer and a server, and to a method for printing bills.

In certain countries, many payment transactions occurring between consumers and merchants are cash transactions. Consequently, many merchants and consumers do not declare such transactions to fiscal authorities, and do not pay taxes associated with such transactions, considering that there is no easy way for fiscal authority to track cash transactions.

A significant proportion of payment transactions concerns goods or services for which consumers are eligible for a tax rebate. Indeed, many payment transactions are done in the context of consumers' professional activity. However, in order for consumers to be eligible for a tax rebate, a bill must be provided to fiscal authorities. Therefore, certain fiscal authorities have decided to track the bills in order to better monitor the payment transactions and better identify tax frauds. For example, in Brazil, fiscal authorities have specified a fiscal printer. The fiscal printer keeps a digital copy of the printed bills, and at the end of the month a summary of all bills is printed and stored for later inspection by fiscal authorities.

Existing fiscal printers have a number of drawbacks. In particular, they are complex and therefore expensive. Indeed, the fiscal printer needs to be tamperproof. Consequently it incorporates many countermeasures. In addition, most point of sales terminals (also known as POS) comprising a printer do not comply with fiscal printer specifications. This forces merchants to buy not only a POS but also an accredited fiscal printer, which is expensive, and occupies space. Such POS and fiscal printer are inconvenient (and sometimes impossible) to carry all day, which is a significant drawback in certain domains such as outside marketplace or taxi drivers. The ergonomics of state of the art POS and fiscal printer is not well adapted to the use of the terminal as a mobile device because of the presence of two devices, and because of the size, of the shape and of the human interface of those devices.

The invention relates to a mobile phone comprising a user interface and communication means, the mobile phone further comprising a bill inputting module, a bill archiving module, and a bill printing module.

The bill archiving module archives the bills in storage means accessible to fiscal authorities. Consequently, fiscal authorities can track payment transactions by tracking bills, without the need for a complex fiscal printer.

The storage means may be centralized and located in premises controlled by fiscal authorities. Centralized storage means avoid the multiplication of storage means such as fiscal printers. Centralized storage also facilitates access of fiscal authorities to the bills. In state of the art, each merchant has his own storage means, which multiplies the number of storage means and exposes the storage means to a threat since storage means are under custody of merchants, who are likely to be willing to fraud them. In addition, in state of the art, fiscal authorities have to visit each merchant in order to inspect their bills.

Storage means may also be decentralized. For example, certain mobile phones operate with a smart card inserted therein. The smart card may in particular be the property of a network operator, and authenticate the user of the mobile phone on the network operator. The smart card is a tamperproof device, and it is relatively simple compared to a fiscal printer. In particular, it is much smaller and much cheaper. Therefore the bills may be stored in the smart card inserted in the mobile phone, in particular in new generations of high memory capacity smart cards. Compared to state of the art, decentralized storage is advantageous in that it avoids the installation of an infrastructure for centralizing the storage, thereby lowering the initial complexity needed to set up the system.

In a preferred embodiment of the invention, the bill inputting module comprises a bill inputting application for inputting a bill via the mobile phone user interface, the bill archiving module comprises a bill archiving application for archiving the bill on a server connected to the mobile phone via the communication means, and the bill printing module comprises a bill printing application for printing the inputted bill on a printer connected to the mobile phone via the communication means.

For mobile phones including a smart card, it is preferred to store the bill inputting application, the bill printing application and the bill archiving application in the smart card, as smart cards can be easily personalized with such applications in smart card factories, and smart card factories are trusted environments. In addition smart cards can easily be replaced. Programming a mobile phone is usually more complex and less secure, although it is also a possibility.

One possibility for avoiding the initial complexity of setting up an infrastructure for centralized storage means while offering an easier fiscal authority access to the archived bills than with the fiscal printer is the following. It is proposed that the bill archiving module archive the bill in a smart card inserted in the mobile phone, and that the smart card host a web server granting access to the stored bills. TCP/IP smart cards well known in state of the art enable the hosting of a web server. Therefore recent mobile phones such as 3G phones (UMTS etc.) which have a permanent Internet access, at least when the mobile phone is switched on, can allow fiscal authorities to access the web server on the smart card and check the bills stored in the smart card via the smart card web server. It is preferred to use a secure protocol such as SSL for accessing the web server, in order to restrict access to the web server to authorized entities only. Authorized entities may comprise fiscal authorities and the merchant, who might be willing to access the history of his bills. Write access shall be restricted. For example, write access might be forbidden. Alternatively, write access may be allowed to certain persons, but all changes recorded in a log file for later inspection in case there is a doubt on the legitimacy of the change. For example, a change might be legitimate if it results from a mistyping in the bill, but not legitimate if it results in a modification of the bill to reduce the amount and therefore reduce the associated tax. The fiscal authorities can inspect the merchant customers' bills and check the merchant's version of the bill against the customer's version of the bill in order to verify the legitimacy of a change in the bills stored by the merchant.

The bill printing module preferably contains activation means for each bill inputted via the bill inputting module. The activation means may consist of a flag associated with each bill. The activation means are triggered by the successful archiving of said bill by the bill archiving module. The triggering of the activation means may consist in setting the flag associated with the bill. Therefore, the printing of the bill is possible only after archiving the bill on the server. This renders fraud more difficult. Indeed, it is no longer possible to disturb the archival of the bill, since this would result in the bill not being printed.

In preferred embodiments, the mobile phone comprises a bankcard reader, and the mobile phone further comprises payment transaction means for paying a bill with a bankcard inserted in the bankcard reader.

The invention also relates to a system comprising a mobile phone, a printer, and a server. The mobile phone is a mobile phone as described above, The printer comprises communication means for communicating with the mobile phone. The server comprises communication means for communicating with the mobile phone and storage means for archiving bills sent by the mobile phone.

The invention also relates to a method for printing a bill, the method comprising a bill inputting step wherein the bill is inputted on a mobile phone, a bill archiving step wherein the mobile phone archives the bill on a server connected to the mobile phone, and a bill printing step wherein the mobile phone prints the bill on a printer connected to the mobile phone.

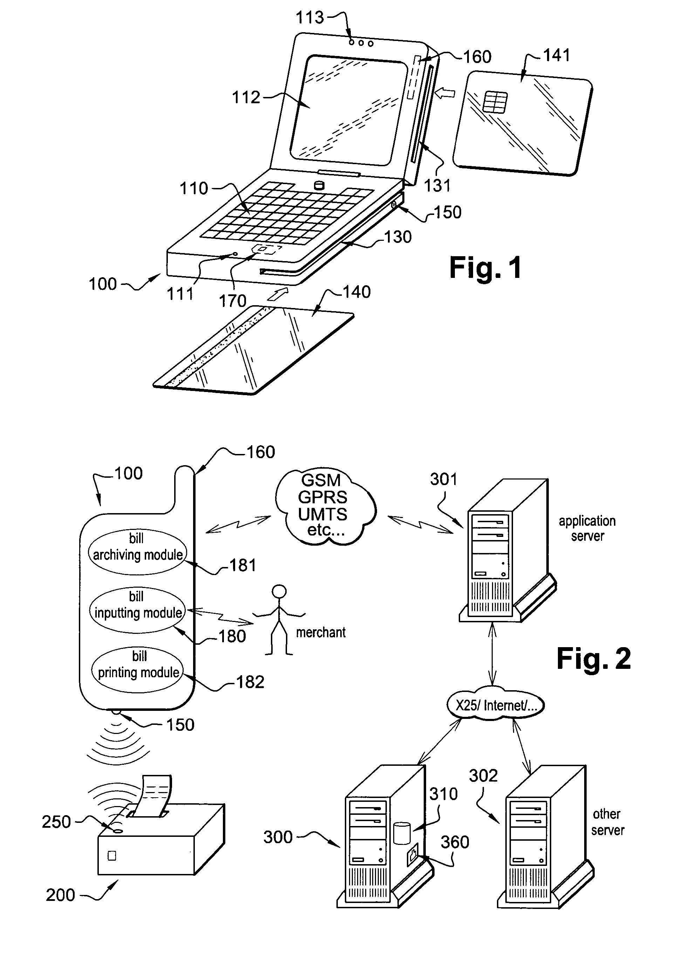

The invention and its advantages will be explained more in details in the following specification referring to the appended drawings, in which Figure 1 shows a mobile phone according to the invention, and Figure 2 shows a system according to the invention.

The mobile phone 100 of Figure 1 comprises a user interface. The components of the user interface comprise a keypad 110, a microphone 111, a display 112, and a speaker 113. The user interface is used in conventional manner, for example in order to type a phone number and call it. But in the context of the invention the user interface is also used for inputting bills. For example, a merchant may type a transaction amount and other elements of a bill on the keypad 110, and check that he typed the bill correctly on the display 112. Alternatively, a blind merchant might record the bill thanks to the microphone 111, the bill may then be converted into text with a voice recognition algorithm, and the blind merchant might check whether the bill was properly recorded by listening to it via the speaker 113, thanks to a voice synthesis module converting the text of the bill into speech.

The mobile phone 100 also comprises communication means 150, 160. On Figure 1 communication means comprise infra red communication means through the infra red LED 150 and GSM communication through the antenna 160 embedded in the mobile phone. The mobile phone communication means 150, 160 may more generally comprise local area communication means, such as Infra Red, Bluetooth, USB, firewire, Wifi etc. Local area communication means are particularly adapted to communication with the printer. Infra red is a preferred technology because it is very simple and very cheap. The mobile phone communication means may also comprise wide area communication means such as GSM, UMTS, Wifi, WiMax, etc. GSM is one of the most widespread today, therefore it is one of the preferred choices, however emerging standards such as UMTS and WiMax will become more and more interesting in the future. Some communication means may be both wide area communication means and local area communication means. For example, as known in state of the art, WiFi can be used for VolP telephony (wide area communication) when the surrounding infrastructure supports it, or for communicating with a personal computer in the same room (local area communication). In a preferred embodiment, wide area communication means 160 are used to communicate with a server 300 in which the bills are archived. However, it is also possible to have a storage means inside a smart card 170 inserted in the mobile phone 100, such as a SIM card 170, in which case the communication between the mobile phone 100 and the storage means is by means of local area communication means, such as ISO 7816. Most recent smart cards are able to store around 512Kb, therefore in an application where bills occupy an average 100 bytes, such smart card can store above 5000 bills. It is advantageous to have a web server in the smart card 170, because of the widespread use of web protocols. The smart card web server may be accessed from the mobile phone 100 using for example TCP/IP over ISO 7816 in a manner well known in the art. The mobile phone 100 is preferably connected to the Internet and makes the smart card web server accessible to fiscal authorities. It should be noted that storing the server in the smart card 170 has a lower initial complexity, therefore the setup costs are lower, but in the long term it is more complex to manage. Indeed, the processing of the "fiscal ticket reports" is likely to be more complex, both for the shop owner and for the fiscal administration, than when everything is centralized on a server 300 supervised by the fiscal authority.

The mobile phone 100 preferably comprises a reader 130, 131 for communicating with a bankcard 140, 141. This reader 130, 131 comprises interfaces, namely a magnetic stripe interface 130 for communicating with a magnetic stripe bankcard 140, and an ISO 7816 interface 131 for communicating with an ISO 7816 contact bankcard such as an EMV bankcard 141. Other interfaces would be possible in different embodiments, for example it would be possible to integrate an ISO 14443 contact-less interface for communicating with a contact-less bankcard, the contact-less interface comprising an antenna in the body of the mobile phone 100 in a manner known in the art. Applications to enables credit card payment are added in the mobile phone 100 in order to take advantage of the reader 130, 131. When a reader is added on the mobile phone 100, it is also advantageous to add a secure keypad and a secure display in order to manage bankcard transactions more securely than through the regular keypad 110 and display 112 of the mobile phone 100.

The reader 130, 131 is advantageous, because it permits charging the bill on a bankcard 140, 141 in the same transaction, which avoids the use of an additional device (POS) and also avoids repeating several steps twice, for example the amount of the transaction is inputted only once. This is faster and more secure since it avoids fraudulent or accidental inconsistencies during multiple inputting of the same data.

Figure 2 shows a system according to the invention. Figure 2 highlights the interactions between the mobile phone 100 and other system components.

The mobile phone 100 comprises a bill inputting module 180, which is used in conjunction with the user interface components 110-113 in order to enter a bill in a manner described above.

The mobile phone 100 further comprises a bill archiving module 181, in charge of storing the inputted bill. Storing is preferably done on storage means 310 of a server 300. The server 300 is preferably a server managed by fiscal authorities. The server 300 gathers information related to the bills and associated payment transactions through the mobile phone 100, and provides a remote access to such information to authorized users, which may comprise merchants and fiscal authority employees. Merchants access is preferably restricted to their own transactions, while fiscal authority employees can preferably access all transactions. The server 300 comprises communication means 360 in order to communicate with the mobile phone 100. In a preferred embodiment, communication means 360 may consist of an Ethernet card 360, which connects to an application server 301, the application server 301 communicating with the mobile phone 100 through a network, preferably a GSM, GPRS or UMTS network. The application server 301 may belong to the bank of the merchant possessing the mobile phone 100, and may enable connection of the mobile phone 100 not only to the fiscal server 300 but also to other servers 302.

The mobile phone 100 also comprises a bill printing module 182, for printing the bill on a printer 200. The printer 200 incorporates communication means 250, which consist preferably of an infra red LED 250, or alternatively other simple local area communication means for connecting to the mobile phone 100. It is preferred to prevent the bill printing module 182 from printing a bill which has not yet been archived by the bill archiving module 181, for example by using activation means described above.

Each of the bill inputting module 180, bill archiving module 181 and bill printing module 182 preferably comprise above described bill inputting application, bill archiving application and bill printing application. Such applications are preferably stored in a SIM card 170. It is also preferred to execute such applications in the SIM card, in which case the application may rely on SIM Toolkit proactive commands enabling the SIM card 170 to control components of the mobile phone 100 such as the user interface 110-113 in a manner known in the art. This is advantageous because a SIM card 170 is a trusted environment, which is usually deemed more secure than the mobile phone 100.

The mobile phone 100, the system and the method of the invention provide merchants, in particular small merchants, with a POS solution and fiscal printer solution compatible with the low traffic of bankcards and having the capability to provide a fiscal print out in case of cash payment. Instead of requiring a specific fiscal printer the invention relies on a virtual fiscal printer, as the printer is a regular printer 200 and all the security management is pushed to the mobile phone 100.

## Claims

1. A mobile phone (100) comprising a user interface (110-113) and communication means (150, 160), the mobile phone (100) being **characterized in that** it comprises a bill inputting module (180), a bill archiving module (181), and a bill printing module (182).

2. Mobile phone (100) according to claim 1, wherein the bill archiving module (181) archives the bill in a smart card (170) inserted in the mobile phone (100).

3. The mobile phone (100) of claim 1, wherein the bill inputting module (180) comprises a bill inputting application for inputting a bill via the mobile phone user interface (110-113), the bill archiving module (181) comprises a bill archiving application for archiving the bill on a server (300) connected to the mobile phone (100) via the communication means (160), and the bill printing module (182) comprises a bill printing application for printing the inputted bill on a printer (200) connected to the mobile phone (100) via the communication means (150).

4. The mobile phone (100) of claim 3, wherein the bill inputting application, the bill printing application and the bill archiving application are stored in a smart card (170) inserted in the mobile phone (100).

5. Mobile phone (100) according to claim 4, wherein the bill archiving module (181) archives the bill in a web server located on a smart card (170) inserted in the mobile phone (100).

6. Mobile phone (100) according to any previous claim, wherein the bill printing module (182) contains activation means for each bill inputted via the bill inputting module (180), said activation means being triggered by the successful archiving of said bill by the bill archiving module (181).

7. Mobile phone (100) according to any previous claim, wherein the mobile phone (100) comprises a bankcard reader (130, 131), the mobile phone further comprising payment transaction means for paying a bill with a bankcard (140, 141) inserted in said bankcard reader (130, 131).

8. System comprising a mobile phone (100), a printer (200), and a server (300), the system being **characterized in that** the mobile phone (100) is a mobile phone (100) according to any previous claim, **in that** the printer (200) comprises communication means (250) for communicating with the mobile phone (100), and **in that** the server (300) comprises communication means (360) for communicating with the mobile phone (100) and storage means (310) for archiving bills sent by the mobile phone (100).

9. Method for printing a bill **characterized in that** it comprises the following steps:
a. A bill inputting step wherein the bill is inputted on a mobile phone (100)
b. A bill archiving step wherein the mobile phone (100) archives the bill on a server (300) connected to the mobile phone (100)
c. A bill printing step wherein the mobile phone (100) prints the bill on a printer (200) connected to the mobile phone (100)
